# EUROPEAN PATENT APPLICATION

(11) **EP 4 571 874 A1**
(43) Date of publication of application: **18.06.2025**
(21) Application number: 24209985.1
(22) Date of filing: 30.10.2024
(51) Int. Cl.: H01M 4/133, H01M 4/1393, H01M 4/1395, H01M 4/36, H01M 4/583, H01M 4/587

(54) **ANODE FOR LITHIUM SECONDARY BATTERY AND LITHIUM SECONDARY BATTERY INCLUDING THE SAME**

(30) Priority: 14.12.2023 KR 20230181974
(71) Applicant: SK On Co., Ltd., Seoul 03161 (KR)
(72) Inventor: JEON, Chan Young, Daejeon 34124 (KR); KIM, Kyung Hoon, Daejeon 34124 (KR); LEE, Jong Hyuk, Daejeon 34124 (KR); LEE, Ha Jin, Daejeon 34124 (KR); HWANG, Hae Suk, Daejeon 34124 (KR)
(74) Representative: Stolmár & Partner Patentanwälte PartG mbB

(57) **Abstract**

Anodes and lithium secondary batteries including the anodes are disclosed. In an embodiment, an anode includes an anode current collector; and an anode mixture layer on at least one surface of the anode current collector. The anode mixture layer includes a lower portion, a middle portion, and an upper portion that are arranged sequentially in a thickness direction from a surface adjacent to the anode current collector to a surface opposite to the anode current collector. Each porosity of the lower portion, the middle portion, and the upper portion is 24% or more, and a difference in porosity between the upper portion and the middle portion is 4% or less.

## Description

### BACKGROUND

### 1. FIELD

The technology and implementations disclosed in this patent document generally relate to an anode for a lithium secondary battery and a lithium secondary battery including the same.

### 2. DESCRIPTION OF RELATED ART

Recently, research has been actively conducted on electric vehicles (EVs) that can replace fossil fuel-based vehicles, which are one of the main causes of air pollution, and lithium secondary batteries with high discharge voltage and output stability are mainly used as a power source for such EVs.

Technologies are being developed to improve the performance of lithium secondary batteries, extend their lifespan, and enable fast charging to make such lithium secondary batteries more suitable as power sources for EVs and other battery-based systems such as battery-based energy storage systems (ESSs).

### SUMMARY

The disclosed technology can be implemented in some embodiments to provide an anode for a secondary battery (e.g., lithium secondary battery) having a uniform porosity for each position of an anode mixture layer.

The disclosed technology can be implemented in some embodiments to provide an anode for a secondary battery( e.g., lithium secondary battery) that facilitates easy electrolyte introduction.

The disclosed technology can be implemented in some embodiments to provide an anode for a secondary battery (e.g., lithium secondary battery) with improved electrode resistance.

The disclosed technology can be implemented in some embodiments to provide a secondary battery (e.g., lithium secondary battery) with extended lifespan and excellent performance during the lifespan.

The disclosed technology can be implemented in some embodiments to provide a secondary battery (e.g., lithium secondary battery) with excellent fast charging performance.

An anode for a secondary battery (e.g., lithium secondary battery) based on an embodiment of the disclosed technology may include an anode current collector; and an anode mixture layer disposed on at least one surface of the anode current collector. In some implementations, the anode current collector may be configured to collect current generated in the lithium secondary battery (e.g., current generated by active materials in electrodes). In some implementations, the anode mixture layer may be divided into three portions in a thickness direction from a surface adjacent to the anode current collector to a surface opposite to the anode current collector. In one example, the anode mixture layer may include a lower portion, a middle portion, and an upper portion. In one example, the lower portion is disposed over the anode current collector, the middle portion is disposed over the lower portion, and the upper portion is disposed over the middle portion. In some implementations, the porosity of each of the lower portion, the middle portion, and the upper portion is 24% or more, and a difference in porosity between the upper portion and the middle portion is 4% or less.

In an embodiment, a difference in porosity between the upper portion and the lower portion may be 4% or less.

In an embodiment, a thickness of the anode mixture layer may be 50 µm to 200 µm.

In an embodiment, the anode mixture layer may include artificial graphite as an anode active material.

In an embodiment, the artificial graphite may be assembled artificial graphite in the form of secondary particles in which two or more primary particles are assembled. For example, the artificial graphite may include secondary particles formed by combining two or more primary particles.

In an embodiment, the artificial graphite may include a carbon coating layer on a surface of the artificial graphite.

In an embodiment, the anode mixture layer may include a first anode active material and a second anode active material, and the first anode active material and the second anode active material may be different from each other.

In an embodiment, the first anode active material may include artificial graphite.

In an embodiment, the second anode active material may include one or more selected from natural graphite and silicon-based active materials.

In an embodiment, based on a total weight of the anode mixture layer, a weight of the first anode active material may be greater than or equal to a weight of the second anode active material.

A secondary battery based on an embodiment of the disclosed technology of the disclosed technology may include the anode implemented based on the embodiments described above. In some implementations, the secondary battery may include a lithium secondary battery.

In an embodiment of the disclosed technology, a porosity in an anode for a lithium secondary battery may be uniformly controlled for each position of a mixture layer in the anode.

In an embodiment of the disclosed technology, electrolyte can be easily introduced into an anode for a lithium secondary battery.

In an embodiment of the disclosed technology, it may be possible to improve electrode resistance of an anode for a lithium secondary battery.

In an embodiment of the disclosed technology, the lifespan performance of a lithium secondary battery can be improved.

In embodiment of the disclosed technology, the fast charging performance of a lithium secondary battery can be improved.

### BRIEF DESCRIPTION OF DRAWINGS

Certain aspects, features, and advantages of the disclosed technology are illustrated by the following detailed description with reference to the accompanying drawings.
FIG. 1 is a view conceptually illustrating a cross-section of an anode for a lithium secondary battery based on an embodiment of the disclosed technology.
FIG. 2 is a view conceptually illustrating a cross-section of an anode for a lithium secondary battery based on an embodiment of the disclosed technology.
FIG. 3 is a view conceptually illustrating a roll pressing process when manufacturing an anode for a lithium secondary battery based on an embodiment of the disclosed technology.
FIG. 4 is a view illustrating a method of measuring a porosity of an anode for a lithium secondary battery based on an embodiment of the disclosed technology.

### DETAILED DESCRIPTION

Section headings are used in the present document only for ease of understanding and do not limit scope of the embodiments to the section in which they are described.

Features, and certain advantages in connection with specific implementations of the disclosed technology disclosed in this patent document are described by example embodiments with reference to the accompanying drawings.

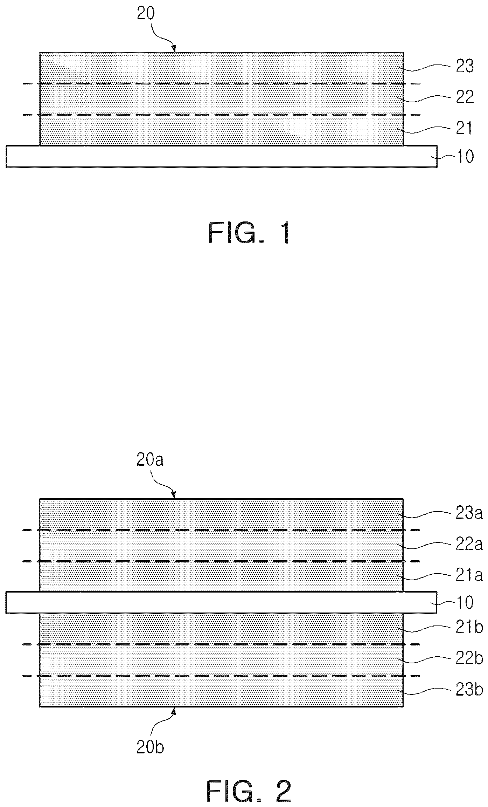

FIG. 1 is a view conceptually illustrating a cross-section of an anode for a lithium secondary battery based on an embodiment of the disclosed technology.

FIG. 2 is a view conceptually illustrating a cross-section of an anode for a lithium secondary battery based on an embodiment of the disclosed technology.

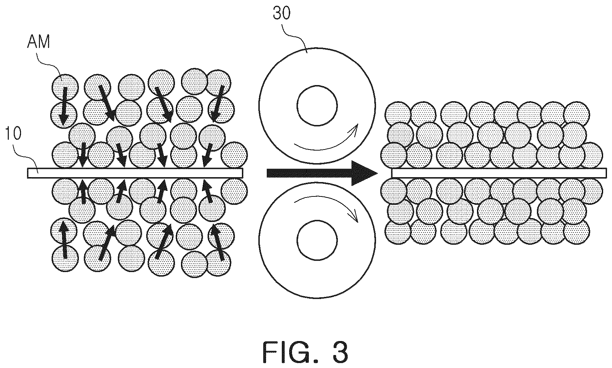

FIG. 3 is a view conceptually illustrating a roll pressing process when manufacturing an anode for a lithium secondary battery based on an embodiment of the disclosed technology.

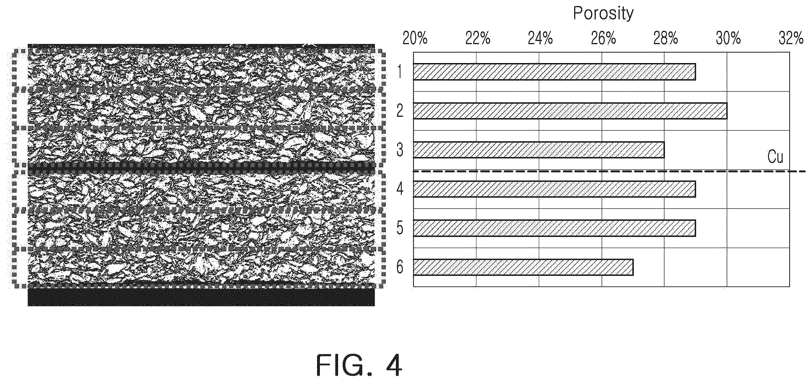

FIG. 4 is a view illustrating a method of measuring a porosity of an anode for a lithium secondary battery based on an embodiment of the disclosed technology.

An anode mixture layer 20 of an anode for a lithium secondary battery based on an embodiment of the disclosed technology may be manufactured by drying an anode slurry applied to an anode current collector 10 and then rolling the anode slurry with a rolling roll 30 (see FIG. 3). In such a rolling process, active material particles AM included in an upper portion 23 of the anode mixture layer 20 and adjacent to an outer surface may be subject to the greatest pressure by the rolling roll 30. As a result, the active material particles AM included in the upper portion 23 of the anode mixture layer 20 may result in deformation or damage during the rolling process, which may cause the upper portion 23 of the anode mixture layer 20 to have a relatively high density and low porosity. In this case, the flow of electrolyte to the outer surface of the anode mixture layer may become difficult, which may result in a decrease in output performance. As the diffusion resistance of lithium ions increases, the lifespan of the electrode may decrease and/or the fast charging performance may decrease.

Additionally, the active material particles AM that is contained in a lower portion 21 of the anode mixture layer 20 and adjacent to the anode current collector 10 have difficulty in flowing due to their positions, and thus, similarly to the upper portion 23, the lower portion 21 of the anode mixture layer 20 may also have a relatively high density and low porosity.

As described above, the upper portion 23 and the lower portion 21 of the anode mixture layer 20 may have a relatively high density and low porosity compared to a middle portion 22 thereof, and thus, the density and porosity for each position of the anode mixture layer 20 may not be uniform.

An anode for a lithium secondary battery based on an embodiment of the disclosed technology of the disclosed technology may have uniform density and porosity for each position of the anode mixture layer, making it easy for electrolyte to be introduced inside, and since lithium ions may easily diffuse, life performance and fast charging performance of the battery may be improved. Hereinafter, embodiments of the disclosed technology will be described in detail.

### Anode for Lithium Secondary Battery

An anode for a lithium secondary battery based on an embodiment of the disclosed technology may include: an anode current collector 10; and an anode mixture layer 20 disposed on at least one surface of the anode current collector 10. In some implementations, the anode mixture layer 20 includes a lower portion 21, a middle portion 22 and an upper portion 23 that are sequentially arranged. For example, the anode mixture layer 20 is divided into these three portions in a thickness direction from a surface adjacent to the anode current collector 10 to a surface opposite to the anode current collector 10. Each porosity of the lower portion 21, the middle portion 22 and the upper portion 23 is 24% or more, and a difference in porosity between the upper portion 23 and the middle portion 22 is 4% or less. In some embodiments discussed in this patent document, lithium secondary batteries are discussed as an example of secondary batteries, and the term "lithium secondary battery" can be used to indicate other types of secondary batteries.

In some embodiments discussed in this patent document, the expression "divided into three portions" may or may not indicate that the three portions are divided into equal thicknesses. In one example, the thicknesses of the lower portion 21, the middle portion 22 and the upper portion 23 are the same. In another example, the thicknesses of the lower portion 21, the middle portion 22 and the upper portion 23 are different from one another. In another example, the thicknesses of two of the lower portion 21, the middle portion 22 and the upper portion 23 are the same and the thickness of the remaining portion is different the two portions.

In some implementations, thicknesses of the lower portion 21, the middle portion 22 and the upper portion 23 may be completely the same. In some implementations, thicknesses of the lower portion 21, the middle portion 22 and the upper portion 23 may have slight differences from each other. For example, a thickness ratio of the lower portion 21 and the middle portion 22 may be 45:55 to 55:45, a thickness ratio of the lower portion 21 and the upper portion 23 may be 45:55 to 55:45, and a thickness ratio of the middle portion 22 and the upper portion 23 may be 45:55 to 55:45.

In the anode mixture layer 20, each of the lower portion 21, the middle portion 22 and the upper portion 23 has porosity of 24% or more, and has a small difference in porosity, the porosity for each position of the anode mixture layer 20 may be uniform. Specifically, the difference in porosity between the upper portion 23 and the middle portion 22 may be 3% or less, 2% or less, or 1% or less, and may be 0.01% or more, 0.1% or more, 1% or more, 2% or more, or 3% or more. In some embodiments, the difference in porosity between the upper portion 23 and the middle portion 22 may be 0%.

In some embodiments, the difference in porosity between the upper portion 23 and the lower portion 21 may be 4% or less. Specifically, the difference in porosity between the upper portion 23 and the lower portion 21 may be 3% or less, 2% or less, or 1% or less, and may be 0.01% or more, 0.1% or more, 1% or more, 2% or more, or 3% or more. In some embodiments, the difference in porosity between the upper portion 23 and the middle portion 22 may be 0%.

When the difference in porosity between the upper portion 23 and the middle portion 22 and the difference in porosity between the upper portion 23 and the lower portion 21 are in the above-mentioned range, the porosity for each portion of the anode mixture layer 20 may uniform, the lifespan performance and the rapid charging performance of the battery may be excellent.

Each of the porosity of the lower portion 21, the middle portion 22 and the upper portion 23 is 24% or more. Specifically, the porosity of the lower portion 21 may be 27% or more or 29% or more, and may be 50% or less, 40% or less or 34% or less. The porosity of the middle portion 22 may be 26% or more or 28% or more, and may be 45% or less, 34% or less, or 30% or less. The porosity of the upper portion 23 may be 25% or more, 28% or more, 30% or more, or 32% or more, and may be 50% or less, 40% or less or 34% or less.

When the porosity of the anode mixture layer 20 is less than 24%, the active material particles AM are over-compressed, and thus pores in the anode mixture layer 20 are not sufficiently secured, making it difficult for an electrolyte to penetrate and increasing the diffusion resistance of lithium ions. As a result, the lifespan performance and the rapid charging performance of the battery may be significantly reduced. Therefore, when each of the porosity of the lower portion 21, the middle portion 22 and the upper portion 23 is 24% or more, since sufficient pores are secured in the anode mixture layer 20, the penetration of the electrolyte may be facilitated and the diffusion resistance of lithium ions may be reduced, thereby improving the lifespan performance and the fast charging performance of the battery.

As illustrated in FIG. 1, the anode for a lithium secondary battery based on an embodiment of the disclosed technology may include the anode current collector 10; and the anode mixture layer 20 on one surface of the anode current collector 10, and the anode mixture layer 20 may include the lower portion 21, the middle portion 22 and the upper portion 23 when divided into three portions in the thickness direction from the surface adjacent to the anode current collector 10 to the surface opposite to the anode current collector 10.

As illustrated in FIG. 2, an anode for a lithium secondary battery based on an embodiment may include an anode current collector 10; a first anode mixture layer 20a on one surface of the anode current collector 10; and a second anode mixture layer 20b on the other surface of the anode current collector 10. The first anode mixture layer 20a may include a lower portion 21a, a middle portion 22a and an upper portion 23a that are sequentially arranged from a surface adjacent to the anode current collector 10 to a surface opposite to the anode current collector 10 when the first anode mixture layer 20a is divided into three portions in a thickness direction from the surface adjacent to the anode current collector 10 to the surface opposite to the anode current collector 10. The second anode mixture layer 20b may include a lower portion 21b, a middle portion 22b and an upper portion 23b that are sequentially arranged from the surface adjacent to the anode current collector 10 to the surface opposite to the anode current collector 10 when the second anode mixture layer 20b is divided into three portions in the thickness direction from the surface adjacent to the anode current collector 10 to the surface opposite to the anode current collector 10. The porosity characteristics of the lower portion 21a, the middle portion 22a and the upper portion 23a of the first anode mixture layer and the porosity characteristics of the lower portion 21b, the middle portion 22b and the upper portion 23b of the second anode mixture layer may exhibit the same porosity characteristics as the lower portion 21, the middle portion 22 and the upper portion 23, respectively.

The components of the anode current collector 10 are not particularly limited. For example, the anode current collector may be a plate or a foil formed of one or more of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and alloys thereof. The thickness of the anode current collector is not particularly limited. For example, the thickness of the anode current collector may be 0.1 to 50 µm.

In some embodiments, the thickness of the anode mixture layer 20 may be 50 µm to 200 µm. For example, the thickness of the anode mixture layer 20 may be 70 µm or more or 90 µm or more, and may be 150 µm or less or 110 µm or less.

In some embodiments, the anode mixture layer 20 may include artificial graphite as an anode active material. Since the artificial graphite has higher hardness than that of natural graphite, it may be possible to easily secure pores even after the artificial graphite goes through a rolling process when the artificial graphite is included in the anode mixture layer. Accordingly, the artificial graphite may have lower compressed density than that of natural graphite. For example, the compressed density of the artificial graphite may be 1.4 g/cc or more and 1.8 g/cc or less. The compressed density may be measured based on the density after pressing a pellet formed of 2g of artificial graphite at 6kN. In some embodiments, the anode mixture layer 20 may include only artificial graphite as the anode active material.

In some embodiments, an average particle diameter D50 of the artificial graphite may be 5 µm to 30 µm. For example, the average particle diameter D50 of the artificial graphite may be 7 µm or more, and may be 20 µm or less. When the average particle size D50 of the artificial graphite is within the above-mentioned range, lithium ions may enter and exit easily, resulting in excellent output performance. A method of measuring the average particle size D50 of the artificial graphite is not particularly limited, and may be measured using a typical particle size analyzer.

The artificial graphite may be assembled (or aggregated) artificial graphite, single-particle (primary particle) carbon graphite, or mixed carbon particles that are a mixture thereof. In some embodiments, the assembled (or aggregated) artificial graphite may be secondary particles in which two or more primary particles are bound together. For example, the artificial graphite may include secondary particles formed by combining two or more primary particles.

In some implementations, the assembled (or aggregated) artificial graphite may include particles with curved surfaces that form pores between them. Therefore, the assembled (or aggregated) artificial graphite may secure pores more easily even when the assembled artificial graphite is included in the anode mixture layer 20 that undergoes the rolling process.

In some embodiments, the artificial graphite may include a carbon coating layer on a surface thereof. The carbon coating layer may exhibit higher hardness than that of graphite. For example, the carbon coating layer may be formed on a surface of the artificial graphite by mixing pitch and artificial graphite and then heating and carbonizing a mixture thereof. When forming the carbon coating layer on the surface of the artificial graphite, the hardness of the particles may increase, and deformation of the particles may be suppressed during the rolling process. Accordingly, when artificial graphite having the carbon coating layer formed on the surface thereof is included as the anode active material, deformation of the active material particles AM may be prevented during the rolling process, and the density and porosity for each opposition of the anode mixture layer 20 may be uniform.

In some embodiments, the anode mixture layer 20 may include a first anode active material and a second anode active material, and the first anode active material and the second anode active material may be different from each other. The second anode active material may have higher capacitance characteristics than that of the first anode active material, and may have lower hardness or a higher volume expansion rate during battery charging/discharging than the first anode active material.

In some embodiments, the first anode active material may include artificial graphite, and the second anode active material may include one or more types of materials selected from natural graphite and silicon-based active materials.

The natural graphite may have high capacitance characteristics than that of artificial graphite, but may have lower hardness. Accordingly, the natural graphite may have a higher compressed density than that of artificial graphite. For example, the compressed density of the natural graphite may be 1.5 g/cc or more and 2.0 g/cc or less. The compressed density may be measured based on the density after pressing a pellet formed of 2g of natural graphite at 6kN.

In some embodiments, an average particle diameter D50 of the natural graphite may be 5 µm to 30 µm. For example, an average particle diameter D50 of the natural graphite may be 8 µm or more and 20 µm or less. When the average particle size D50 of the natural graphite is in the above-mentioned range, since lithium ions may enter and exit easily, output performance thereof may be excellent. A method of measuring the average particle diameter D50 of the natural graphite is not particularly limited, and may be measured by a typical particle size analyzer.

A silicon-based active material has higher capacitance characteristics than the artificial graphite, but a volume expansion rate thereof may be high during battery charging/discharging. In some embodiments, the silicon-based active material may have higher hardness than the natural graphite. Accordingly, the silicon-based active material may have a lower compressed density than that of the natural graphite. For example, the compressed density of the silicon-based active material may be 1.0 g/cc or more and 1.6 g/cc or less. The compressed density may be measured based on the density after pressing a pellet formed of 2 g of the silicon-based active material at 6 kN.

In some embodiments, the average particle diameter D50 of the silicon-based active material may be 1 µm to 20 µm. For example, the average particle diameter D50 of the silicon-based active material may be 3 µm or more and 10 µm or less. When the average particle diameter D50 of the silicon-based active material is in the above-mentioned range, since lithium ions may enter and exit easily, output performance thereof may be excellent. A method for measuring the average particle diameter D50 of the silicon-based active material is not particularly limited, and may be measured by a typical particle size analyzer.

The silicon-based active material is not particularly limited as long as silicon is contained therein, and may be an active material capable of alloying with lithium (Li). For example, the silicon-based active material may be one or more types selected from the group consisting of silicon (Si), silicon oxide (SiOx; 0<x<2), metal-doped silicon oxide (SiOx; 0<x<2), and carbon-coated silicon oxide (SiOx; 0<x<2), silicon-carbon composite (Si-C), and silicon alloys.

In some embodiments, a weight of the first anode active material may be greater than a weight of the second anode active material based on the total weight of the anode mixture layer 20. For example, a weight ratio of the first anode active material and the second anode active material included in the anode mixture layer 20 may be 50:50 to 99:1, 60:40 to 90:10, or 70:30 to 80:20. When the weight of the first anode active material is larger than the weight of the second anode active material based on the total weight of the anode mixture layer 20, the uniformity of density and porosity for each position of the anode mixture layer may also be improved while securing high capacitance characteristics.

In some embodiments, a total content of the anode active material in the anode mixture layer 20 may be 50 to 99 wt%. For example, the total content of the anode active material in the anode mixture layer 20 may be 70 wt% or more and 90 wt% or less.

In some embodiments, the anode mixture layer 20 may further include a binder. The type of binder is not particularly limited. For example, the binder may be styrene-butadiene rubber (SBR), carboxymethylcellulose (CMC), polyacrylic acid (PAA), polyethylenedioxythiophene (PEDOT) or others. A content of the binder included in the anode mixture layer 20 may be, for example, 0.1 to 5 wt%.

In some embodiments, the anode mixture layer 20 may further include a conductive material. The type of conductive material is not particularly limited. For example, the conductive material may be one or more selected from particulate carbon materials and fibrous carbon materials. The particulate carbon material may be carbon black such as Super-P or Super-C, acetylene black, or Ketjen black. The fibrous carbon material may be carbon fiber, carbon nanotube (CNT), or vapor grown carbon fiber (VGCF). A content of the conductive material included in the anode mixture layer 20 may be, for example, 0.1 to 5 wt%.

A method of manufacturing an anode for a lithium secondary battery according to the above-described embodiments is not particularly limited. For example, the anode for the lithium secondary battery may be manufactured by forming the anode mixture layer 20 on at least one surface of the anode current collector 10 with an anode slurry including an anode active material, a solvent, or the like. The solvent is not particularly limited, and an input amount of the solvent may be appropriately adjusted in consideration of a solids content and a viscosity value of a target slurry.

A method of forming the anode mixture layer 20 on at least one surface of the anode current collector 10 using the anode slurry is not particularly limited. For example, the anode mixture layer 20 may be formed in a process of applying the anode slurry to at least one surface of the anode current collector 10 by a method such as bar coating, casting, or spraying, and drying the applied anode slurry at 80 to 120°C.

### Lithium Secondary Battery

A secondary battery (e.g., lithium secondary battery) based on an embodiment of the disclosed technology includes an anode implemented based on one or more of the above-described embodiments. In some embodiments, the lithium secondary battery may include a unit cell including an anode, a cathode, and a separator for the lithium secondary battery described above. The separator may be disposed between the anode and the cathode in the unit cell.

The cathode may include a cathode current collector; and a cathode mixture layer provided on at least one surface of the cathode current collector.

The components of the cathode current collector are not particularly limited. For example, the electrode current collector may be a plate or a foil formed of one or more of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and alloys thereof. A thickness of the cathode current collector is not particularly limited. For example, the thickness of the electrode current collector may be 0.1 to 50 µm.

The cathode mixture layer may include a cathode active material. The cathode active material is not particularly limited, and may include compounds capable of reversibly intercalating and de-intercalating lithium ions. For example, the cathode active material may include lithium-nickel metal oxide. The lithium-nickel metal oxide may further include at least one of cobalt (Co), manganese (Mn), and aluminum (Al).

In some embodiments, the cathode active material or the lithium-nickel metal oxide may include a layered structure or a crystal structure represented by Formula 1 below.

Formula 1: LiₓNiₐM_{b}O_{2+z}

In Formula 1, there are 0.9≤x≤1.2, 0.6<a<0.99, 0.01≤b≤0.4, and -0.5≤z≤0.1. As described above, M may include Co, Mn, and/or Al.

The chemical structure represented by Formula 1 represents a bonding relationship included in the layered structure or the crystal structure of the cathode active material, and does not exclude other additional elements. For example, M may include Co and/or Mn, and Co and/or Mn may be provided as a main active element of the cathode active material along with Ni. Formula 1 above is provided to express the bonding relationship of the main active elements and should be understood as encompassing the introduction and substitution of additional elements.

In some embodiments, auxiliary elements may be further included in addition to the main active element to improve the chemical stability of the cathode active material or the layered structure/crystal structure. The auxiliary elements may be incorporated together into the layered/crystal structure to form bonds, and even in this case, the auxiliary elements should be understood as being included in the scope of the chemical structure represented by Formula 1.

The auxiliary elements may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. For example, the auxiliary element may act as an auxiliary active element that contributes to the capacitance/output activity of the cathode active material, for example, together with Co or Mn, like Al.

For example, the cathode active material or the lithium-nickel metal oxide may include a layered structure or a crystal structure represented by the following Formula 1-1.

Formula 1-1: LiₓNiₐM1_{b1}M2_{b2}O_{2+z}

In Formula 1-1, M1 may include Co, Mn, and/or Al. M2 may include the auxiliary elements described above. In Formula 1-1, there are 0.9≤x≤1.2, 0.6≤a≤0.99, 0.01≤b1+b2≤0.4, and -0.5≤z≤0.1.

The cathode active material may further include a coating element or a doping element. For example, elements substantially identical to or similar to the above-described auxiliary elements may be used as coating elements or doping elements. For example, any of the above-described elements alone or in a combination of two or more thereof may be used as coating elements or doping elements.

The coating element or doping element may be present on a surface of lithium-nickel metal oxide particles, or may penetrate through the surface of the lithium-nickel metal composite oxide particles and may be included in a bonding structure represented by Formula 1 or Formula 1-1.

The cathode active material may include nickel-cobalt-manganese (NCM)-based lithium oxide. In this case, NCM-based lithium oxide having increased nickel content may be used.

A content of Ni in the NCM-based lithium oxide (e.g., a mole fraction of nickel in a total number of moles of nickel, cobalt, and manganese) may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may also include a lithium cobalt oxide-based active material, a lithium manganese oxide-based active material, a lithium nickel oxide-based active material, or a lithium iron phosphate (LFP)-based active material (for example, LiFePO4).

In some embodiments, the cathode active material may include Mn-rich active materials, Li rich layered oxide (LLO)/Over Lithiated Oxide (OLO)-based active materials, and Co-less-based active materials having a chemical structure or a crystal structure represented by Formula 2.

Formula 2: p[Li₂MnO₃]·(1-p)[Li_{q}JO₂]

In Formula 2, there are 0<p<1 and 0.9≤q≤1.2, and J may include at least one element of Mn, Ni, Co, Fe, Cr, V, Cu, Zn, Ti, Al, Mg and B.

The cathode mixture layer may further include a binder. The binder is not particularly limited. For example, the binder may include one or more types of polyvinylidene fluoride, styrene butadiene rubber (SBR), polytetrafluoroethylene, polyvinylidenefluoride vinylidene fluoride-hexafluoropropylene copolymer, polyacrylonitrile and polymethyl methacrylate.

The cathode mixture layer may further include a conductive material. The conductive material is not particularly limited. For example, the conductive material may include one or more types of graphite such as natural graphite or artificial graphite; carbon-based materials such as carbon black, acetylene black, ketjen black, channel black, furnace black, lamp black, summer black, carbon fiber, and carbon nanotubes (CNT); metal powder particles or metal fibers such as copper, nickel, aluminum and silver; conductive whiskers such as zinc oxide and potassium titanate; conductive metal oxides such as titanium oxide; or conductive polymers such as polyphenylene derivatives.

The separator is not particularly limited. For example, the separator may include a porous polymer film formed of polyolefin-based polymers such as ethylene homopolymer, propylene homopolymer, ethylene/butene copolymer, ethylene/hexene copolymer and ethylene/methacrylate copolymer. Additionally, the separator may include a non-woven fabric formed of high melting point glass fiber, polyethylene terephthalate fiber, and the like.

In some embodiments, the lithium secondary battery may be manufactured by storing the above-described unit cell in a pouch, which is a battery case, and then injecting an electrolyte solution thereinto.

The electrolyte solution may include an organic solvent and lithium salt. The organic solvent may serve as a medium through which ions involved in an electrochemical reaction of the battery are able to move, and may use, for example, a carbonate-based solvent, an ester-based solvent, an ether-based solvent, a ketone-based solvent, an alcohol-based solvent or an aprotic solvent alone or in a mixture of two or more thereof, and when two or more types of solvent are mixed and used, a mixing ratio may be appropriately adjusted depending on desired performance of the battery.

The lithium salt is a material that is dissolved in an organic solvent and acts as a source of lithium ions in the battery, enables an operation of basic lithium secondary batteries and promotes a movement of lithium ions between a cathode and an anode. As the lithium salt, known materials may be used at a concentration suitable for the purpose. When necessary, the electrolyte solution may further include a known solvent to improve charge/discharge characteristics, flame retardancy characteristics, and the like, and may include known additives.

In some embodiments, the unit cell may not include a separator between the cathode and the anode but may include a solid electrolyte. The solid electrolyte is not particularly limited and may be, for example, an oxide-based solid electrolyte, a sulfide-based solid electrolyte, or a polymer-based solid electrolyte.

### 1. Manufacture of Anode and Secondary Battery

### 1) Manufacture of Anode

Based on a solids content, after mixing a first anode active material and the second anode active material as illustrated in Tables 2 and 3 below, 97.3 wt% of a mixture thereof was prepared, and 1.2 wt% of carboxymethylcellulose (CMC) and 1.5 wt% of styrene-butadiene rubber (SBR) were mixed with a solvent (distilled water), thus manufacturing an anode slurry. Active materials illustrated in Table 1 below were used as the first anode active material and the second anode active material, and as illustrated in Tables 2 and 3 below, the first anode active material and the second anode active material were differently used for each Inventive Example (examples implemented based on some embodiments of the disclosed technology) and each Comparative Example.

The anode slurry at a loading weight (LW) of 13 mg/cm² was applied to an anode current collector (Cu-foil) having a thickness of 10 µm, and was then dried at 100°C for 12 hours to form an anode mixture layer on one surface of the anode current collector. As described above, the anode on which the anode mixture layer was formed on both surfaces of the anode current collector was rolled to have a thickness of 88 µm and a density of 1.7 g/cc, thus manufacturing a final anode.

**Table 1:**

| **Anode Active Material** | **Division** | **Type** | **D50 (µm)** |
|---|---|---|---|
| **Artificial Graphite** | A | Assembled Type | 14.8 |
| | B | Single Particle | 11.1 |
| | C | Mixed Type (Assembled Type + Single Particle) | 13.1 |
| | A' | Assembled Type + Carbon Coating Layer | 15.8 |
| | B' | Single particle + Carbon Coating Layer | 12.1 |
| | C' | Mixed Type + Carbon Coating Layer | 14.1 |
| **Natural Graphite** | D | Large Particle Size | 16.5 |
| | E | Small Particle Size | 11.0 |
| **Silicon-based Active Material (SiOx; 0<x<2)** | F | - | 6.5 |

**Table 2:**

| **Division** | **Inventive Example 1** | **Inventive Example 2** | **Inventive Example 3** | **Inventive Example 4** | **Inventive Example 5** | **Inventive Example 6** | **Inventive Example 7** | **Inventive Example 8** | **Inventive Example 9** | **Inventive Example 10** | **Inventive Example 11** |
|---|---|---|---|---|---|---|---|---|---|---|---|
| **First Anode Active Material (X)** | A | B | C | A' | B' | C' | A | B | C | C' | B' |
| **Second Anode Active Material (Y)** | - | D | E | D | E | D | F | F | D+F | E+F | E |
| **X:Y Weight Ratio** | 100:0 | 90:10 | 80:20 | 70:30 | 60:40 | 50:50 | 90:10 | 80:20 | 70:30 (D:F = 25:5) | 70:30 (E:F = 15:15) | 40:60 |

**Table 3:**

| **Division** | **Comparative Example 1** | **Comparative Example 2** | **Comparative Example 3** | **Comparative Example 4** | **Comparative Example 5** | **Comparative Example 6** | **Comparative Example 7** |
|---|---|---|---|---|---|---|---|
| **First Anode Active Material (X)** | A' | B | C | A | B | C' | C |
| **Second Anode Active Material (Y)** | D | E | E | D+F | E+F | D+F | D |
| **X:Y Weight Ratio** | 45:55 | 40:60 | 20:80 | 40:60 (D:55, F:5) | 30:70 (E:60, F:10) | 30:70 (D: 5 5, F: 15) | 50:50 |

### 2) Manufacturing of Secondary Battery

A cathode was manufactured by applying and drying a slurry including an NCM-based active material, which is a lithium-transition metal complex oxide, on aluminum foil (Al-foil). After disposing the secondary battery cell manufactured by interposing a polyolefin separator between the cathode and the anode manufactured as described above into a secondary battery pouch, an electrolyte solution in which 1M of LiPF₆ was dissolved in a solvent mixed with ethylene carbonate (EC) and diethyl carbonate (DEC) was injected into the secondary battery pouch and the secondary battery pouch was sealed, thus manufacturing a pouch-type lithium secondary battery. The manufactured pouch-type lithium secondary battery was applied as secondary battery samples for Inventive Examples and Comparative Examples.

### 2. Evaluation of Anode and Secondary Battery

### 1) Measurement of Porosity

A cross-section of an anode mixture layer manufactured as described above was analyzed using a scanning electron microscope (SEM) to measure porosity. Specifically, as illustrated in FIG. 4, in an SEM observation image of the cross-section of the anode mixture layer, the image was processed to contrast the active material and the pores (the active material portion was brightened, and the pore portion was darkened). Then, an area of the active material and the pores in the image was counted with the number of pixels using a histogram and was quantitatively quantified, and then, areas of each portion were confirmed by frequency distribution, thus calculating the porosity.

Then, the porosity was measured three times at each position (lower portion/middle portion/upper portion) for electrodes of the same composition, and average values thereof were calculated, and results thereof are illustrated in Tables 4 and 5 below. In this case, the anode mixture layer was divided into three portions in the thickness direction: a lower portion, a middle portion, and an upper portion. Additionally, the results of calculating 1) a difference in porosity between the upper portion and the middle portion and 2) a difference in porosity between the upper portion and the lower portion are also illustrated in Tables 4 and 5 below.

### 2) Evaluation of Lifespan Performance

Lifespan performance evaluation was performed on the secondary battery samples in the DOD94 (SOC 2-96) range at 25°C. The secondary battery samples were charged at 1C up to a voltage corresponding to SOC 96 under constant current/constant voltage (CC/CV) conditions, and were discharged at 1C up to a voltage corresponding to SOC 2, thus measuring the discharge capacitance. After repeating the process for 500 cycles, the results of calculating a discharge capacitance maintenance ratio compared to initial discharge capacitance as a percentage (%) are illustrated in Tables 6 and 7 below.

### 3) Evaluation of Rapid Charging Performance

Rapid charging performance was evaluated in the DOD94 (SOC 2-96) range for the secondary battery samples at 25°C. The secondary battery samples were charged at 2C up to a voltage corresponding to SOC 96 under constant current/constant voltage (CC/CV) conditions, and were discharged at 2C up to a voltage corresponding to SOC 2, thus measuring the discharge capacitance. After repeating the process for 100 cycles, the results of calculating the discharge capacitance maintenance ratio compared to the initial discharge capacitance as a percentage (%) are illustrated in Tables 6 and 7 below.

**Table 4:**

| **Porosity (%)** | **Inventive Example 1** | **Inventive Example 2** | **Inventive Example 3** | **Inventive Example 4** | **Inventive Example 5** | **Inventive Example 6** | **Inventive Example 7** | **Inventive Example 8** | **Inventive Example 9** | **Inventive Example 10** | **Inventive Example 11** |
|---|---|---|---|---|---|---|---|---|---|---|---|
| **Upper Portion** | 32 | 30 | 30 | 28 | 28 | 28 | 29 | 29 | 27 | 28 | 26 |
| **Middle portion** | 28 | 29 | 28 | 28 | 28 | 29 | 28 | 28 | 30 | 29 | 30 |
| **Lower Portion** | 32 | 30 | 31 | 30 | 29 | 30 | 29 | 30 | 31 | 31 | 29 |
| **Upper Portion - Middle portion** | 4 | 1 | 2 | 0 | 0 | -1 | 1 | 1 | -3 | -1 | -4 |
| **Upper Portion - Lower Portion** | 0 | 0 | -1 | -2 | -1 | -2 | 0 | -1 | -4 | -3 | -3 |

**Table 5:**

| **Porosity (%)** | **Comparative Example 1** | **Comparative Example 2** | **Comparative Example 3** | **Comparative Example 4** | **Comparative Example 5** | **Comparative Example 6** | **Comparative Example 7** |
|---|---|---|---|---|---|---|---|
| **Upper Portion** | 24 | 23 | 21 | 22 | 22 | 23 | 26 |
| **Middle portion** | 29 | 29 | 28 | 27 | 28 | 28 | 31 |
| **Lower Portion** | 29 | 30 | 28 | 28 | 30 | 29 | 29 |
| **Upper Portion Middle portion** | -5 | -6 | -7 | -5 | -6 | -5 | -5 |
| **Upper Portion - Lower Portion** | -5 | -7 | -7 | -6 | -8 | -6 | -3 |

**Table 6:**

| **Division** | **Inventive Example 1** | **Inventive Example 2** | **Inventive Example 3** | **Inventive Example 4** | **Inventive Example 5** | **Inventive Example 6** | **Inventive Example 7** | **Inventive Example 8** | **Inventive Example 9** | **Inventive Example 10** | **Inventive Example 11** |
|---|---|---|---|---|---|---|---|---|---|---|---|
| **Lifespan Performance** | 88% | 85% | 81% | 81% | 83% | 84% | 78% | 75% | 77% | 74% | 73% |
| **Rapid Charging Performance** | 75% | 71% | 77% | 81% | 78% | 79% | 74% | 75% | 72% | 81% | 72% |

**Table7:**

| **Division** | **Comparative Example 1** | **Comparative Example 2** | **Comparative Example 3** | **Comparative Example 4** | **Comparative Example 5** | **Comparative Example 6** | **Comparative Example 7** |
|---|---|---|---|---|---|---|---|
| **Lifespan Performance** | 68% | 61% | 65% | 69% | 64% | 55% | 69% |
| **Rapid Charging Performance** | 54% | 55% | 51% | 49% | 45% | 41% | 55% |

Referring to Tables 4 to 7 above, anodes of Inventive Examples 1 to 10 in which each of porosity of the lower portion, the middle portion and the upper portion of the anode mixture layer was 24% or more, and a difference in porosity between the upper portion and the middle portion was 4% or less showed that the lifespan performance and the rapid charging performance were superior to the anodes of Comparative Examples 1 to 6.

Specifically, the anode of Inventive Example 1 including only assembled artificial graphite as the anode active material was found to have the most excellent lifespan performance and the most excellent rapid charging performance. Additionally, among the anodes including artificial graphite as the first anode active material and one or more types selected from natural graphite and silicon-based active materials as the second anode active material, the anodes of Inventive Examples 2 to 10 in which a weight of the first anode active material is greater than a weight of the second anode active material based on the total weight of the anode mixture layer were found to have the lifespan performance and the rapid charging performance superior to the anodes of Comparative Examples 1 to 6.

In some implementations, comparing Inventive Example 6 and Comparative Example 7, in the case of Inventive Example 6 including artificial graphite (C') coated with carbon as the first anode active material under the same conditions, both the lifespan performance and the rapid charging performance of the battery were found to be superior to Comparative Example 7 including artificial graphite (C) without carbon coating as the first anode active material.

Additionally, comparing Inventive Example 11 and Comparative Example 2, in the case of Inventive Example 11 including artificial graphite (B') coated with carbon as the first anode active material under the same conditions, both the lifespan performance and the rapid charging performance of the battery were found to be superior to Comparative Example 2 including artificial graphite (B) without carbon coating as the first anode active material.

### 3. Performance Evaluation related to Anode Porosity

### 1) Comparative Example 8

An anode of Comparative Example 8 in which a weight of the second anode active material composed of natural graphite D and E was more than or equal to 90% of the total anode active material and the average porosity was less than 24%, was manufactured in the same manner as described above. As a result of evaluating the lifespan performance and the rapid charging performance of the anode of Comparative Example 8 in the same manner as described above, the lifespan performance and the rapid charging performance were 41% and 47%, respectively, from which the lifespan performance and the rapid charging performance were found to be relatively insufficient.

When the porosity of the anode is low of less than 24%, during a rolling process, fatigue failure of graphite may occur excessively to narrow the pores, and excessive closed pores may be formed to generate unfavorable conditions for electrolyte to penetrate into the anode. Accordingly, in the case of the anode of Comparative Example 8, which has an excessive diffusion resistance of lithium ions, it is determined that when the battery is repeatedly charged/discharged, the precipitation of lithium ions intensifies to rapidly decrease the remaining capacitance.

### 2) Inventive Example 12

An anode of Inventive Example 12 in which a weight of the first anode active material composed of carbon-coated artificial graphite A' and B' is more than or equal to 90% of the total anode active material and an average porosity was more than 34% was manufactured in the same manner as described above. As a result of evaluating the lifespan performance and the rapid charging performance of the anode of Inventive Example 12 in the same manner as described above, the lifespan performance and the rapid charging performance were 75% and 29%, respectively, from which the rapid charging performance was found to be relatively insufficient.

In the case in which the average porosity of the anode was more than 34% due to the excessive hardness of the graphite, when the stress is relieved after the rolling process, a spring-back phenomenon in which a thickness of the anode increases may intensify, resulting in an excessive increase in pores within the anode. Accordingly, in the case of the anode of Inventive Example 12 with excessively increased pores, as electrolyte consumption accelerates during charge/discharge of the battery, the remaining capacitance is determined to be rapidly decreased during rapid charging.

The disclosed technology can be implemented in rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a battery used in various power sources and power supplies, thereby mitigating climate changes in connection with uses of power sources and power supplies. Lithium secondary batteries based on the disclosed technology can be used to address various adverse effects such as air pollution and greenhouse emissions by powering electric vehicles (EVs) as alternatives to vehicles using fossil fuel-based engines and by providing battery-based energy storage systems (ESSs) to store renewable energy such as solar power and wind power.

Only specific examples of implementations of certain embodiments are described. Variations, improvements and enhancements of the disclosed embodiments and other embodiments may be made based on the disclosure of this patent document.

## Claims

1. An anode for a lithium secondary battery, comprising:
an anode current collector configured to collect current generated in the lithium secondary battery; and
an anode mixture layer disposed on at least one surface of the anode current collector,
wherein the anode mixture layer includes a lower portion disposed over the anode current collector, a middle portion disposed over the lower portion, and an upper portion disposed over the middle portion,
wherein the lower portion, the middle portion, and the upper portion include pores, and a porosity of each of the lower portion, the middle portion, and the upper portion is 24% or more, and
a difference in porosity between the upper portion and the middle portion is 4% or less.

2. The anode of claim 1, wherein a difference in porosity between the upper portion and the lower portion is 4% or less.

3. The anode of claim 1 or 2, wherein a thickness of the anode mixture layer is 50 µm to 200 µm.

4. The anode of anyone of claims 1 to 3, wherein the anode mixture layer includes artificial graphite as an anode active material.

5. The anode of claim 4, wherein the artificial graphite includes secondary particles formed by combining two or more primary particles.

6. The anode of claim 4 or 5, wherein the artificial graphite includes a carbon coating layer on a surface of the artificial graphite.

7. The anode of anyone of claims 1 to 6, wherein the anode mixture layer includes a first anode active material and a second anode active material, and
the first anode active material and the second anode active material are different from each other.

8. The anode of claim 7, wherein the first anode active material includes artificial graphite, and
the second anode active material includes one or more selected from natural graphite and silicon-based active materials.

9. The anode of claim 7 or 8, wherein based on a total weight of the anode mixture layer, a weight of the first anode active material is greater than or equal to a weight of the second anode active material.

10. A secondary battery comprising an anode, wherein the anode comprises:
an anode current collector configured to collect current generated in the lithium secondary battery ; and
an anode mixture layer disposed on at least one surface of the anode current collector,
wherein the anode mixture layer includes a lower portion disposed over the anode current collector, a middle portion disposed over the lower portion, and an upper portion disposed over the middle portion,
wherein the lower portion, the middle portion, and the upper portion include pores, and a porosity of each of the lower portion, the middle portion, and the upper portion is 24% or more, and
a difference in porosity between the upper portion and the middle portion is 4% or less.

11. The secondary battery of claim 10, wherein a difference in porosity between the upper portion and the lower portion is 4% or less.

12. The secondary battery of claim 10 or 11, wherein a thickness of the anode mixture layer is 50 µm to 200 µm.

13. The secondary battery of anyone of claims 10 to 12, wherein the anode mixture layer includes artificial graphite as an anode active material.

14. The secondary battery of claim 13, wherein the artificial graphite includes secondary particles formed by combining two or more primary particles.

15. The secondary battery of claim 13 or 14, wherein the artificial graphite includes a carbon coating layer on a surface of the artificial graphite.
